# EUROPEAN PATENT APPLICATION

(11) **EP 3 627 362 A1**
(43) Date of publication of application: **25.03.2020**
(21) Application number: 18210963.7
(22) Date of filing: 07.12.2018
(51) Int. Cl.: G06F 21/30, H04L 9/32, H04L 29/06, H04W 12/06

(54) **METHOD OF PASSWORD AUTHENTICATION BY EYE TRACKING AND RELATED DEVICE**

(30) Priority: 19.09.2018 US 201816136239
(71) Applicant: XRSpace CO., LTD., Taoyuan City 330 (TW)
(72) Inventor: Chou, Peter, 100 Taipei City (TW); Lin, Ming-Ching, 220 New Taipei City (TW); Feng, Yi-Yang, 105 Taipei City (TW)
(74) Representative: Straus, Alexander

(57) **Abstract**

A method of password authentication by eye tracking is disclosed. The method comprises obtaining a user's focus point, displaying at least a graphical unlocking pattern for the user by a head-mounted display, HMD, determining whether the user's focus point is at the graphical unlocking patterns within a time interval or following a preconfigured focal sequence, and determining a password authentication operation is unlocked when the focus point at the graphical unlocking patterns within the time interval or following the preconfigured focal sequence.

## Description

### Field of the Invention

The present disclosure relates to a method, and more particularly, to a method of password authentication by eye tracking in the virtual reality/augmented reality/mixed reality/extended reality system.

### Background of the Invention

Most virtual reality (VR)/augmented reality (AR)/mixed reality (MR)/extended reality (XR) system can track user's movement within a room-scale area from human interface devices carried by a user. The human interface device (e.g. joystick, controller, touchpad, etc.) is used for the user to interact with a software system, for example, a VR game, executed by a computing device. In addition, a head-mounted display (HMD) worn by the user is used for displaying the interacting images generated by the computing device to the user for VR experience.

In order to increase user's willingness of VR immersion, eye tracking are proposed for creating a new user experiences and humanized user interfaces. By quickly and precisely measuring eye positions and eye movement of a user, the VR system "knows" the user's intentions while inside of the HMD.

However, there is no specification for password authentication operation with eye tracking technique. Thus, password authentication operation is still implemented with conventional remote or joystick.

### Summary of the Invention

This in mind, the application aims at providing a method of password authentication by eye tracking in order to solve the abovementioned problems.

This is achieved by a method of password authentication by eye tracking according to claims 1, 7 and 13. The dependent claims pertain to corresponding further developments and improvements.

As will be seen more clearly form the detailed description following below, the claimed method of password authentication by eye tracking comprises obtaining a user's focus point, displaying at least a graphical unlocking pattern for the user by a head-mounted display, HMD, determining whether the user's focus point is at the graphical unlocking patterns within a time interval or following a preconfigured focal sequence, and determining a password authentication operation is unlocked when the focus point at the graphical unlocking patterns within the time interval or following the preconfigured focal sequence.

### Brief Description of the Drawings

FIG. 1 is a schematic diagram of a virtual reality system.
FIG. 2 is a schematic diagram of a virtual reality device of a virtual reality system according to an embodiment of the present disclosure.
FIG. 3 is a flowchart according to an embodiment of the present disclosure.
FIGs. 4-6 are schematic diagrams of password authentication operation according to an embodiment of the present disclosure.

### Detailed Description

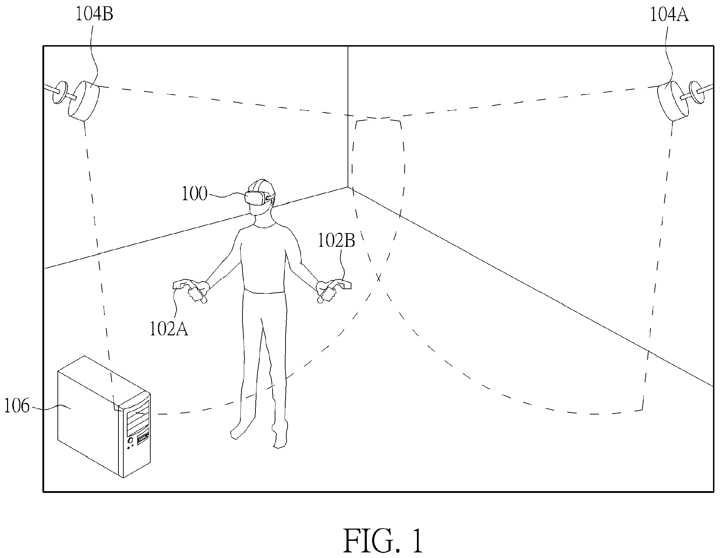

Please refer to FIG. 1, which is a schematic diagram of a virtual reality system according to one embodiment of the present disclosure. Note that, the present invention is not limited to virtual reality system, which could be any system, such as augmented reality (AR), mixed reality (MR), and extended reality (XR) system. The virtual reality (VR) system allows users to move and explore freely in the VR environment. In detail, the VR system includes a head-mounted display (HMD) 100, controllers 102Aand 102B, lighthouses 104A and 104B, and a computing device 106 (e.g. a personal computer). The lighthouses 104A and 104B are used for emitting IR lights, the controllers 102A and 102B are used for generating control signals to the computing device 106, so that a player can interact with a software system, VR game, executed by the computing device 106, and the HMD 100 is used for display interacting images generated by the computing device 106 to the player. The operation of VR system should be well known in the art, so it is omitted herein. In other embodiment, at least two of the HMD 100, the controllers 102A and 102B, the lighthouses 104A and 104B, and the computing device 106 of the virtual reality system can be integrated in an all-in-one device or a cloud-based device. The all-in-one device can be a HMD that combines display, face tracking, storage and computing functions without the need to connect to the cloud, and performs all storage and/or computational steps in a processing unit of the all-in-one device. The cloud-based device can be a HMD that combines display, face tracking, storage and computing functions, and is connected to the cloud, and performs all or part of the storage and/or computational steps in the cloud, to reduce the burden of storage/computing/database establishment.

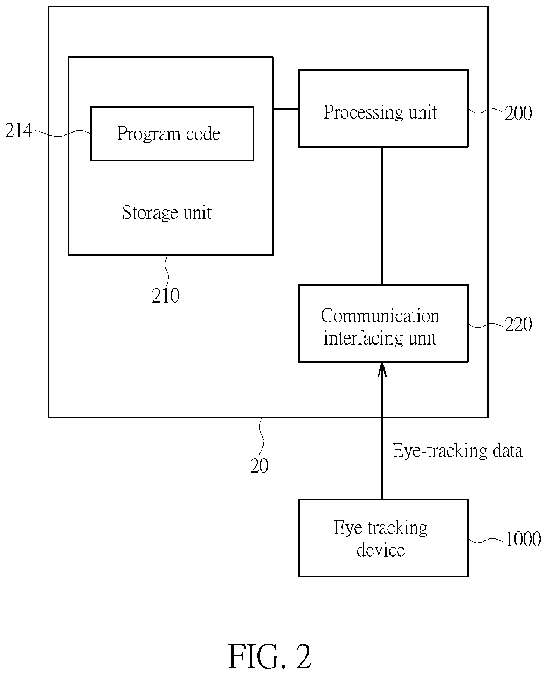

FIG. 2 is a schematic diagram of a VR device according to one embodiment of the present disclosure. The VR device 20 may be the computing device 106 of FIG. 1, and includes a processing unit 200, such as a microprocessor or Application Specific Integrated Circuit (ASIC), a storage unit 210 and a communication interfacing unit 220. The storage unit 210 may be any data storage device that can store a program code 214, for access by the processing unit 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is applied with a wire or wireless communication for exchange signals with the HMD 100 and controllers 102A and 102B of FIG. 1 according to processing results of the processing unit 200. Note that, the communication interfacing unit 220 is further used for reception of eye-tracking data from an eye tracking device 1000, which could be mounted in the HMD 100.

In detail, to overcome abovementioned problem, the present disclosure proposes password authentication with eye tracking technique. Eye tracking technique aims at measuring rotations of the eye in one of several ways, but principally they fall into three categories: (i) measurement of the movement of an object (normally, a special contact lens) attached to the eye; (ii) optical tracking without direct contact to the eye; and (iii) measurement of electric potentials using electrodes placed around the eyes.

In an embodiment, eye-tracking data is collected by an "eye-tracker", namely the eye tracking device 1000, which is mounted in HMD 100 and therefore connected to the computing device 106. The eye tracking device 1000 includes two common components: a light source and a camera. The light source (e.g. near-infrared) is directed toward the eye. The camera tracks the reflection of the light source along with visible ocular features such as the pupil. This data is used to extrapolate the rotation of the eye and ultimately the direction of gaze. By analyzing these collected eye-tracking data, user's focus point is acquired.

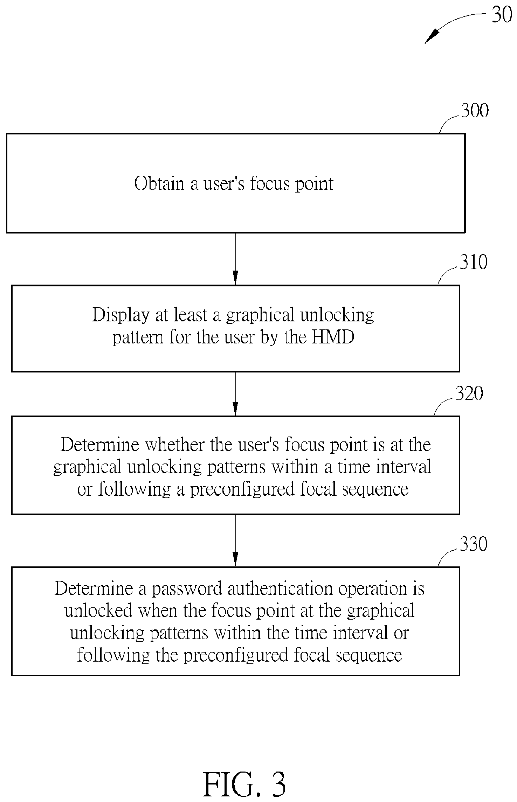

Reference is made to FIG. 3. A flowchart of a process 30 according to an embodiment of the present disclosure is illustrated. The process 30 could be utilized in the VR device 20 of FIG. 2 for password authentication. The process 30 may be compiled into a program code 214 to be stored in the storage unit 210, and may include the following steps:
Step 300: Obtain a user's focus point.
Step 310: Display at least a graphical unlocking pattern for the user by the HMD.
Step 320: Determine whether the user's focus point is at the graphical unlocking patterns within a time interval or following a preconfigured focal sequence.
Step 330: Determine a password authentication operation is unlocked when the focus point at the graphical unlocking patterns within the time interval or following the preconfigured focal sequence.

According to the process 30, the VR device 20 (e.g. computing device 106) obtains eye-tracking data/eye movement information (e.g. user's sight, gaze, and focus point) from the eye tracking device 1000 (e.g. near-infrared and camera), and then determines whether the user's focus point is at the graphical unlocking patterns within a time interval (e.g. 3 seconds) or following a preconfigured focal sequence. If the user's focus point is not at the graphical unlocking patterns within the predefined time interval or is not conformed to the preconfigured focal sequence, the VR device 20 determines that the password authentication operation is locked. Thus, the user could not see the confidential information displayed by the HMD 100. On the other hand, if the user's focus point is at the graphical unlocking patterns within the predefined time interval and is conformed to the preconfigured focal sequence, the VR device 20 determines that the password authentication operation is unlocked, and thus VR device 20 displays the confidential information for the user by the HMD 100. In addition, instead of confidential information, the VR device 20 may activate the next application (i.e. the next scene of the VR game) for the user to continue the VR game.

Note that, the focus point may be projected at the graphical unlocking patterns in a 2-dimensional image or 3-dimension image in accordance with the eye tracking mechanism.

Moreover, the password authentication may be triggered by user's gesture and/or voice, from a human interface device of the VR system, or an interrelated application of the VR game is activated, such that the VR device displays the graphical unlocking patterns of the password authentication for the user to unlock.

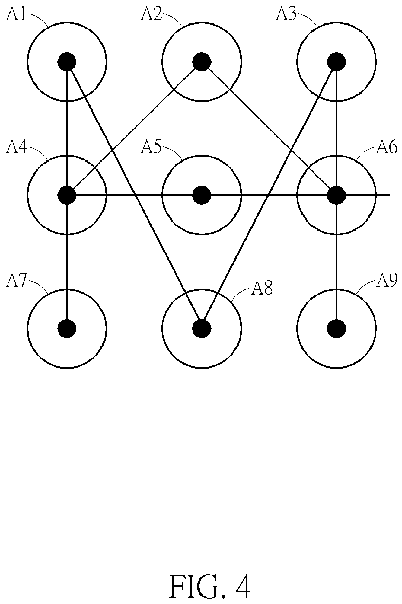

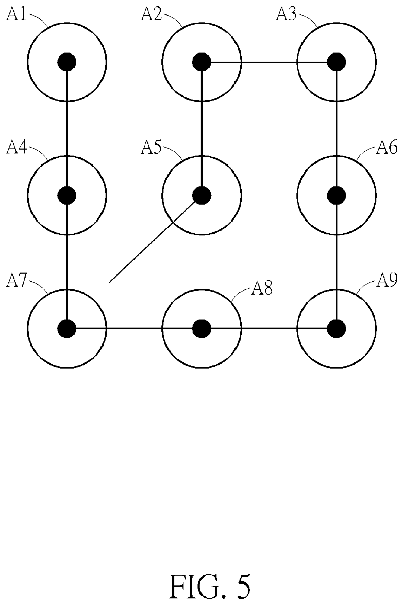

In an embodiment, the preconfigured focal sequence includes a track of graphical unlocking pattern, a matched graphical unlocking pattern and a vector corresponding to the matched graphical unlocking pattern, which is not limited herein. FIGs. 4-6 are schematic diagrams of password authentication operation according to an embodiment of the present disclosure. In FIGs. 4-5, the graphical unlocking pattern is illustrated with dots A1-A9. The user looks the dots A1-A9 in order, to fulfill the preconfigured focal sequence. For example, the user gazes at dot A7 first, and then dot A4, dot A1, dot A8, dot A3, dot A6, dot A9, dot A6, dot A2, dot A4, dot A5, and finally dot A6 within the predetermined time interval (e.g. 5 seconds). Thus, the password authentication is successfully unlocked. In other embodiments, the user gazes at dot A1, dot A4, dot A7, dot A8, dot A9, dot A6, dot A3, dot A2, dot A5 in order, to fulfill the track of graphical unlocking pattern in accordance with the preconfigured focal sequence.

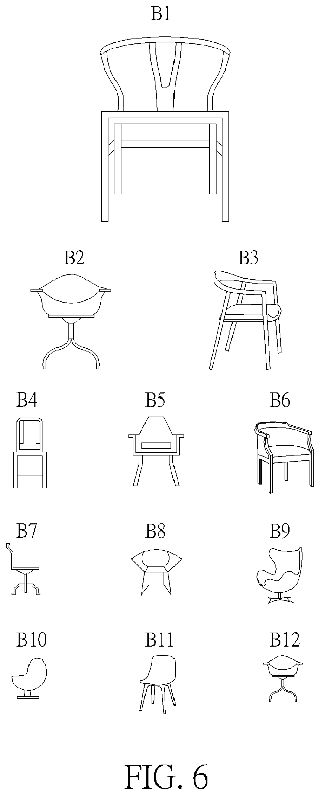

In FIG. 6, the graphical unlocking pattern is illustrated with different object graphs. For example, the objects of FIG. 6 are different chair patterns B1-B12. The user gazes chairs patterns B1-B12 with indication/notification from the computing device 106 displayed by the HMD 100, or preset rules in the VR game. In this case, the user may be indicated to watch chairs without armrest, to unlock the password authentication. The preset rules are not limited herein, and any rules/orders which could be used for recognizing the patterns that the user looks at by the eye tracking device is applicable in the article.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the VR device 20.

In conclusion, the present disclosure addresses to password authentication by eye tracking to secure user's information in the virtual environment. In detail, the password authentication is operated by user's focus point at graphical unlocking patterns within a time interval or following a preconfigured focal sequence, to unlock the confidential information or proceed to the next application of VR game.

## Claims

1. A method of password authentication by eye tracking, **characterized by** the method comprising:
obtaining a user's focus point;
displaying at least a graphical unlocking pattern of a password authentication operation for the user by a head-mounted display, HMD;
determining whether the user's focus point is at the graphical unlocking patterns within a time interval or following a preconfigured focal sequence; and
determining the password authentication operation is unlocked when the focus point at the graphical unlocking patterns within the time interval or following the preconfigured focal sequence.

2. The method of claim 1, **characterized by** further comprising:
triggering the password authentication operation when obtaining a command of a human interface device from a user or the HMD, or an application is activated.

3. The method of claim 2, **characterized in that** the command is obtained from a gesture or voice of the user.

4. The method of claim 2, **characterized by** further comprising:
displaying confidential information for the user by the HMD after the password authentication is unlocked; or
activating the next application after the password authentication is unlocked.

5. The method of claim 1, **characterized in that** the preconfigured focal sequence includes a track of graphical unlocking pattern, a matched graphical unlocking pattern and a vector corresponding to the matched graphical unlocking pattern.

6. The method of claim 1, **characterized in that** the step of obtaining the user's focus point comprises:
obtaining the focus point projected at the graphical unlocking patterns in a 2-dimensional image or 3-dimension image.

7. A head-mounted display, HMD, for password authentication by eye tracking, the HMD comprising:
a processing unit for executing a program;
a storage unit coupled to the processing unit for storing the program; and
an eye tracking unit, connecting to the processing unit, for detecting a user's focus point;
**characterized in that** the program instructs the processing unit or a cloud to perform the following steps, or instructs the processing unit or the cloud to perform a part of the following steps in the processing unit and perform the other part of the following steps in the cloud:
obtaining the user's focus point from the eye tracking unit;
displaying at least a graphical unlocking pattern of a password authentication operation for the user by the HMD;
determining whether the user's focus point is at the graphical unlocking patterns within a time interval or following a preconfigured focal sequence; and
determining the password authentication operation is unlocked when the focus point is at the graphical unlocking patterns within the time interval or following the preconfigured focal sequence.

8. The HMD of claim 7, **characterized in that** the program further instructs the processing unit and/or the cloud to perform the following steps:
triggering the password authentication operation when obtaining a command of a human interface device from the user, or an operation is executed.

9. The HMD of claim 8, **characterized in that** the command is obtained from a gesture or voice of the user.

10. The HMD of claim 8, **characterized in that** the program further instructs the processing unit and/or the cloud to perform the following steps:
displaying confidential information for the user after the password authentication is unlocked; or
executing the next operation after the password authentication is unlocked.

11. The HMD of claim 7, **characterized in that** preconfigured focal sequence includes a track of graphical unlocking pattern, a matched graphical unlocking pattern and a vector corresponding to the matched graphical unlocking pattern.

12. The HMD of claim 7, **characterized in that** the program further instructs the processing means to perform the following steps:
obtaining the focus point projected at the graphical unlocking patterns in a 2-dimensional image or 3-dimension image.

13. A system for password authentication by eye tracking, the system comprising:
a computing device, for executing a software system to generate an image;
a head-mounted display, HMD, connecting to the computing device, for displaying the image to an user; and
at least an eye tracking device, connecting to the computing device, for detecting the user's focus point;
wherein the computing device comprises:
a processing unit for executing a program; and
a storage unit coupled to the processing unit for storing the program;
**characterized in that** the program instructs the processing unit to perform the following steps:
obtaining a user's focus point by the eye tracking device;
displaying at least a graphical unlocking pattern of a password authentication operation for the user by a head-mounted display, HMD, of the system;
determining whether the user's focus point is at the graphical unlocking patterns within a time interval or following a preconfigured focal sequence; and
determining the password authentication operation is unlocked when the focus point at the graphical unlocking patterns within the time interval or following the preconfigured focal sequence.
